# EUROPEAN PATENT SPECIFICATION

(11) **EP 1 384 166 B1**
(45) Date of publication and mention of the grant of the patent: **13.04.2011**
(21) Application number: 01913160.6
(22) Date of filing: 28.02.2001
(51) Int. Cl.: G06F 17/30

(54) **SYSTEM AND METHOD TO PROVIDE ACCESS TO PHOTOGRAPHIC IMAGES AND ATTRIBUTES FOR MULTIPLE DISPARATE CLIENT DEVICES**
SYSTEM UND METHODE UM MEHREREN ANFRAGEGERÄTEN MIT UNTERSCHIEDLICHEN FÄHIGKEITEN DEN ZUGRIFF AUF FOTOGRAPHISCHE BILDER UND DEREN EIGENSCHAFTEN ZU ERMÖGLICHEN
SYSTEME ET METHODOLOGIE PERMETTANT D'ACCEDER A DES IMAGES PHOTOGRAPHIQUES ET A DES ATTRIBUTS DE MULTIPLES DISPOSITIFS CLIENT DISPARATES

(30) Priority: 11.05.2000 US 203507 P; 06.06.2000 US 588875
(43) Date of publication of application: 28.01.2004
(73) Proprietor: Syniverse ICX Corporation, Mountain View, CA 94043 (US)
(72) Inventor: KIRANI, Shekhar, Capitola, CA 95010 (US); EASWAR, Venkat, Cupertino, CA 95014 (US)
(74) Representative: TBK-Patent
(86) International application number: PCT/US2001/006415
(87) International publication number: WO 2001/086511

(56) References cited:
- EP-A- 0 811 939
- EP-A- 0 992 922
- WO-A-97/49252
- WO-A-98/43177

## Description

### COPYRIGHT NOTICE

A portion of the disclosure of this patent document contains material which is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### BACKGROUND OF THE INVENTION

The present invention relates to the field of photography and, more particularly, to online system and methodology for improving online access to digital photographic images and information about those images.

Today, digital imaging, particularly in the form of digital cameras, is a prevalent reality that affords a new way to capture photos using a solid-state image sensor instead of traditional film. A digital camera functions by recording incoming light on some sort of sensing mechanisms and then processes that information (basically, through analog-to-digital conversion) to create a memory image of the target picture. A digital camera's biggest advantage is that it creates images digitally thus making it easy to transfer images between all kinds of devices and applications. For instance, one can easily insert digital images into word processing documents, send them by e-mail to friends, or post them on a Web site where anyone in the world can see them. Additionally, one can use photo-editing software to manipulate digital images to improve or alter them. For example, one can crop them, remove red-eye, change colors or contrast, and even add and delete elements. Digital cameras also provide immediate access to one's images, thus avoiding the hassle and delay of film processing. All told, digital photography is becoming increasingly popular because of the flexibility it gives the user when he or she wants to use or distribute an image.

In order to generate an image of quality that is roughly comparable to a conventional photograph, a substantial amount of information must be captured and processed. For example, a low-resolution 640 x 480 image has 307,200 pixels. If each pixel uses 24 bits (3 bytes) for true color, a single image takes up about a megabyte of storage space. As the resolution increases, so does the image file size. At a resolution of 1024 x 768, each 24-bit picture takes up 2.5 megabytes. Because of the large size of this information, digital cameras usually do not store a picture in its raw digital format but, instead, apply compression technique to the image so that it can be stored in a standard compressed image format, such as JPEG (Joint Photographic Experts Group). Compressing images allows the user to save more images on the camera's "digital film," such as flash memory (available in a variety of specific formats) or other facsimile of film. It also allows the user to download and display those images more quickly.

A variety of digital image products are currently available to consumers. Regardless of how images are recorded digitally, at some later point in time, the image information must become available to other devices - that is, become available to a larger network of digital devices, so that the images may be outputted (e.g., printed to hard copy) or shared with other people. Today, Web sites exist on the Internet with server computers having the capability to organize and display photographs. In a complementary manner, a multitude of different client devices exist with sufficient graphics capabilities for potentially viewing those photographs. For instance, such client devices range from desktop computers running Web browser software to handheld devices (e.g., running under Palm or Windows CE), all connected to the Internet over TCP/IP, each with the capability of displaying information

A newer class of devices is now coming to the market, one with wireless data capabilities as well as substantial display capabilities. These devices connect to the Internet typically over WAP (Wireless Application Protocol). WAP is a communication protocol, not unlike TCP/IP, that was developed by a consortium of wireless companies, including Motorola, Ericsson, and Nokia, for transmitting data over wireless networks. For a description of WAP, see e.g., Mann, S., The Wireless Application Protocol, Dr. Dobb's Journal, pp. 56-66, October 1999. More particularly, WAP includes various equivalents of existing Internet protocols. For instance, WML is a WAP version of the HTML protocol. Other examples include a WAP browser that is a WAP equivalent of an HTML browser and a WAP gateway (on the server side) that is a WAP equivalent of an HTTP server. At the WAP gateway, HTTP is translated to/from WAP.

All told, a plethora of graphics-equipped devices exist today that may be connected to the Internet, through both wireless (e.g., 9600 baud) and wireline connections (e.g., 56k baud, DSL, and cable modem). These devices are capable of displaying graphics, including digital photographic images. However, a fundamental problem exists with current approaches to displaying images residing on the Internet on all of these devices. The personal photographs of users that reside on the Internet currently are accessible from only one class of devices, the HTML browsers. At the same time, other classes of devices, such as described above, include not only the ability to connect to the Internet but also the ability to render complex graphics. Still, these devices are not able to display user photographs on the Internet since these devices support formats and communication transport protocols that are very different from those used by HTML browsers.

Consider, for instance, the example of a Palm™ handheld device. Suppose a user has a "true-color" (e.g., 32-bit depth) 1024 by 768 digital photograph of his or her family on the Web. If the user connects to the Internet using the Palm device, the user still cannot display the photograph. For instance, the Palm device may only support four-level or sixteen-level grayscale. Even if the image could be displayed, the transmission time for downloading the image to the Palm device would be impractical. Still further, even if the image could be downloaded, the display for the Palm may be physically too small to render the image in a manner that is acceptable to the user.

This problem is not limited to just image data but also applies to attribute information for the image. Suppose, for instance, that a user has a collection of photos on the Internet (i.e., online photo album). However, in addition to not being able to view the image, the user is not able to download attribute information to most devices either. Information such as image title, description, and so forth, are simply not available to most devices. This problem stems from the limited bandwidth available to wireless devices, as well as the inability of present-day Internet photographic servers to understand the capabilities of a particular device that is currently connected. Thus, this problem may be summarized as follows. First, present-day devices are not able to tell the server very well what their capabilities are. Second, even if such devices could clearly indicate their capabilities, present-day servers are not designed to act on that information to limit transmitted information to just that which is meaningful for the client device. As more and more classes of network-connected devices come to market, including screen phones and smart set-top boxes, this problem can be expected to grow as each device has its own particular characteristics.

The EP 0 992 922 A discloses a transcoding web proxy that transforms a data object (image) into a low resolution version of the data object (image). The transcoding is performed by decoding the image (having a first resolution) to a bitmap, and then re-encoding the bitmap to create a smaller resolution version of the image.

### SUMMARY OF THE INVENTION

A Photographic Server ("PhotoServer") System of the present invention implements a methodology for providing access to photographic images and attributes for multiple disparate client devices - that is, to target devices of varying hardware and software capabilities. The system enables delivery of photographic images to any device with connectivity capability. The target devices may include both wireless devices (e.g., cellular phone, handheld PDA (personal data assistant), and pager) as well as wireline devices (e.g., desktop computer and videophone).

The PhotoServer includes the following modules: a Photographic Server (i.e., the core "photo server"), a User Data Manager, a Device Profile Manager, a Photo Translator, a Photo Cache, and a Photo Storage (module). The Photographic Server is responsible for serving up the photos based on the target device display capabilities. The display capabilities are communicated to the Photographic Server by the device or the person who owns/controls the device, or are surmised by the system. If the device is communicating its capabilities, it does so during the initiation or during every interaction; alternatively, its capabilities are hard-coded into the Photographic Server based on the prior knowledge of the device. The owner of the device can fine-tune the settings based on the actual settings of the device (such as resolution, preferred method of translation, and the like). The Photographic Server, which works independent of the available transport mechanisms (e.g., wireless or wireline), interacts with all the other modules to translate a requested photo into an appropriate target format.

The system implements a method for providing access to photographic images and attributes for multiple disparate client devices, which operates as follows. First, the method processes the received input request based on a user identifier (user ID) or a photograph identifier (photo ID) for the photos that are of interest. The photo ID is a unique identifier for a particular photograph that either (1) has been previously communicated to the target device (client), or (2) has been created by the target device (i.e., it is the target device's unique identifier), in the case where the target device is connecting for the first time. Next, the method constructs an information record describing the target device's capabilities. Information gathered from this step allows the PhotoServer system to understand exactly what capabilities it can support in the target device. In particular, this information indicates to the system what transformation (if any) is required for translating the original photo into a format suitable for the target device.

Now, the method is ready to check in the Photo Cache to see whether that cache already stores the photo of interest - that is, stores a version of the photo that has been translated in a manner suitable for this particular target device. If the photo (translated for the target device) already exists in the Photo Cache, the method may simply return that to the target device. However, if it is not in the cache, then the method proceeds to additional steps. First, the photo ID and the target device parameters are passed on to the Photo Translator. The task of the Photo Translator, at this point, is to transform the photo from its original format into the format that is desired for the target device (based on target device capabilities). Once the Photo Translator has carried out this task, the newly-transformed version of the photo is copied into the Photo Cache. This translated version of the photo is now returned to the target device, in a streaming fashion.

### BRIEF DESCRIPTION OF THE DRAWINGS

Fig. 1 is a block diagram illustrating a digital computer suitable for implementing distributed processing portions of the present invention.
Fig. 2 is a block diagram of a software system suitable for controlling the computer of Fig. 1.
Figs. 3A-B are block diagrams illustrating a Photographic Server environment, which includes a PhotoServer system of the present invention.
Fig. 3C is a block diagram illustrating storage of information in the system.
Figs. 4A-D are flowcharts illustrating methodology of the present invention for providing access to photographic images and attributes for multiple disparate client devices.

### DETAILED DESCRIPTION OF A PREFERRED EMBODIMENT

The following description focuses on an embodiment of the present invention in an Internet-connected server environment, which is the currently-preferred embodiment. However, those skilled in the art will appreciate that the present invention may be embodied in other devices capable of storing, organizing, and/or otherwise processing digital images. Further, the description will focus on implementation of portions of the invention in an Internet-connected environment including desktop and server computers, such as an IBM-compatible computer running under Microsoft® Windows 2000. The present invention, however, is not limited to any particular one application or any particular environment. Instead, those skilled in the art will find that the system and methods of the present invention may be advantageously embodied on a variety of different platforms, including Macintosh, Linux, BeOS, Solaris, UNIX, and the like. Therefore, the description of the exemplary embodiments which follows is for purposes of illustration and not limitation.

### Basic supporting hardware and software

### A. Basic computer hardware (e.g., for desktop and server computers)

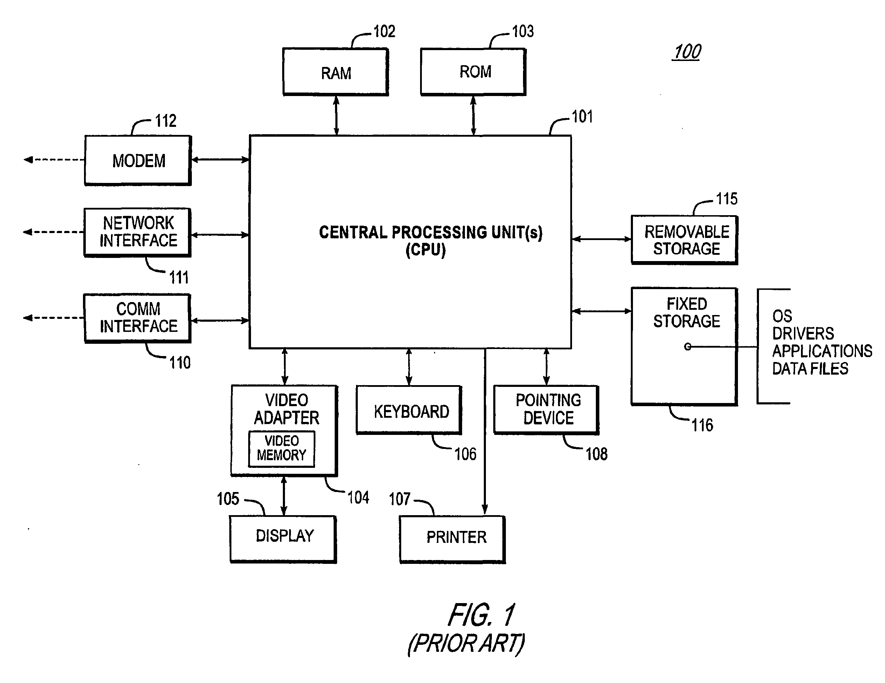

Portions of the present invention may be implemented on a conventional or general-purpose computer system, such as an IBM-compatible personal computer (PC) or server computer. Fig. 1 is a very general block diagram of an IBM-compatible system 100. As shown, system 100 comprises a central processing unit(s) (CPU) 101 coupled to a random-access memory (RAM) 102, a read-only memory (ROM) 103, a keyboard 106, a pointing device 108, a display or video adapter 104 connected to a display device 105, a removable (mass) storage device 115 (e.g., floppy disk), a fixed (mass) storage device 116 (e.g., hard disk), a communication port(s) or interface(s) 110, a modem 112, and a network interface card (NIC) or controller 111 (e.g., Ethernet). Although not shown separately, a real-time system clock is included with the system 100, in a conventional manner.

CPU 101 comprises a processor of the Intel Pentium® family of microprocessors. However, any other suitable microprocessor or microcomputer may be utilized for implementing the present invention. The CPU 101 communicates with other components of the system via a bi-directional system bus (including any necessary input/output (I/O) controller circuitry and other "glue" logic). The bus, which includes address lines for addressing system memory, provides data transfer between and among the various components. Description of Pentium-class microprocessors and their instruction set, bus architecture, and control lines is available from Intel Corporation of Santa Clara, CA. Random-access memory 102 serves as the working memory for the CPU 101. In a typical configuration, RAM of sixteen megabytes or more is employed. More or less memory may be used without departing from the scope of the present invention. The read-only memory (ROM) 103 contains the basic input output system code (BIOS) -- a set of low-level routines in the ROM that application programs and the operating systems can use to interact with the hardware, including reading characters from the keyboard, outputting characters to printers, and so forth.

Mass storage devices 115, 116 provide persistent storage on fixed and removable media, such as magnetic, optical or magnetic-optical storage systems, flash memory, or any other available mass storage technology. The mass storage may be shared on a network, or it may be a dedicated mass storage. As shown in Fig. 1, fixed storage 116 stores a body of program and data for directing operation of the computer system, including an operating system, user application programs, driver and other support files, as well as other data files of all sorts. Typically, the fixed storage 116 serves as the main hard disk for the system.

In basic operation, program logic (including that which implements methodology of the present invention described below) is loaded from the storage device or mass storage 116 into the main (RAM) memory 102, for execution by the CPU 101. During operation of the program logic, the system 100 accepts user input from a keyboard 106 and pointing device 108, as well as speech-based input from a voice recognition system (not shown). The keyboard 106 permits selection of application programs, entry of keyboard-based input or data, and selection and manipulation of individual data objects displayed on the display screen 105. Likewise, the pointing device 108, such as a mouse, track ball, pen device, or the like, permits selection and manipulation of objects on the display screen. In this manner, these input devices support manual user input for any process running on the system.

The computer system 100 displays text and/or graphic images and other data on the display device 105. Display device 105 is driven by the video adapter 104, which is interposed between the display 105 and the system. The video adapter 104, which includes video memory accessible to the CPU 101, provides circuitry that converts pixel data stored in the video memory to a raster signal suitable for use by a cathode ray tube (CRT) raster or liquid crystal display (LCD) monitor. A hard copy of the displayed information, or other information within the system 100, may be obtained from the printer 107, or other output device. Printer 107 may include, for instance, an HP Laserjet® printer (available from Hewlett-Packard of Palo Alto, CA), for creating hard copy images of output of the system.

The system itself communicates with other devices (e.g., other computers) via the network interface card (NIC) 111 connected to a network (e.g., Ethernet network), and/or modem 112 (e.g., 56K baud, ISDN, DSL, or cable modem), examples of which are available from 3Com of Santa Clara, CA. The system 100 may also communicate with local occasionally-connected devices (e.g., serial cable-linked devices) via the communication ("comm") interface 110, which may include a RS-232 serial port, a Universal Serial Bus (USB) interface, or the like. Devices that will be commonly connected locally to the interface 110 include laptop computers, handheld organizers, digital cameras, and the like.

IBM-compatible personal computers and server computers are available from a variety of vendors. Representative vendors include Dell Computers of Round Rock, TX, Compaq Computers of Houston, TX, and IBM of Armonk, NY. Other suitable computers include Apple-compatible computers (e.g., Macintosh), which are available from Apple Computer of Cupertino, CA, and Sun Solaris workstations, which are available from Sun Microsystems of Mountain View, CA.

The above-described system 100 is presented for purposes of illustrating the basic hardware underlying desktop (client) and server computer components that may be employed in the system of the present invention. For purposes of discussion, the following description will present examples in which it will be assumed that there exists a client machine (e.g., desktop "PC") having application software locally that, in turn, is connected to a "server" or remote device having information and/or services of interest to the ultimate end-user. The present invention, however, is not limited to any particular environment or device configuration. In particular, a client/server distinction is neither necessary to the invention nor even necessarily desirable, but is used to provide a framework for discussion. Instead, the present invention may be implemented in any type of computer system or processing environment capable of supporting the methodologies of the present invention presented in detail below.

### B. Basic system software

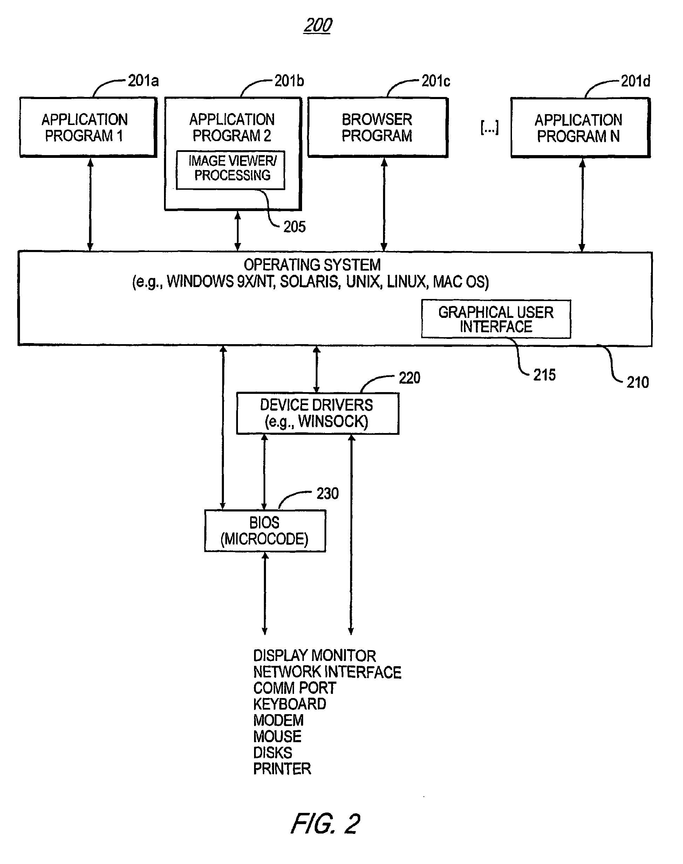

Illustrated in Fig. 2, a computer software system 200 is provided for directing the operation of the computer system 100. Software system 200, which is stored in system memory (RAM) 102 and on fixed storage (e.g., hard disk) 116, includes a kernel or operating system (OS) 210. The OS 210 manages low-level aspects of computer operation, including managing execution of processes, memory allocation, file input and output (I/O), and device I/O. One or more application programs, such as client application software or "programs" 201 (e.g., 201 a, 201b, 201 c, 201 d) may be "loaded" (i.e., transferred from fixed storage 116 into memory 102) for execution by the system 100. For example, when the computer system 100 is used for a desktop client device, application software 201b may include a software 205 capable of viewing or otherwise processing digital image files, such as a Web (HTML) browser.

System 200 includes a graphical user interface (GUI) 215, for receiving user commands and data in a graphical (e.g., "point-and-click") fashion. These inputs, in turn, may be acted upon by the system 100 in accordance with instructions from operating system 210, and/or client application module(s) 201. The GUI 215 also serves to display the results of operation from the OS 210 and application(s) 201, whereupon the user may supply additional inputs or terminate the session. Typically, the OS 210 operates in conjunction with device drivers 220 (e.g., "Winsock" driver) and the system BIOS microcode 230 (i.e., ROM-based microcode), particularly when interfacing with peripheral devices. OS 210 can be provided by a conventional operating system, such as Microsoft® Windows 9x, Microsoft® Windows NT, or Microsoft® Windows 2000, all available from Microsoft Corporation of Redmond, WA. Alternatively, OS 210 can also be an alternative operating system, such as the previously-mentioned operating systems.

The above-described system 100 is presented for purposes of illustrating the basic hardware underlying desktop and server computer components that may be employed in the system of the present invention. For purposes of discussion, the following description will present examples in which it will be assumed that there exists a "server" or similar device connected to clients, which maintains photographic information of interest to the ultimate end user. The present invention, however, is not limited to any particular environment or device configuration. In particular, a server distinction is not necessary to the invention, but is used to provide a framework for discussion. Instead, the present invention may be implemented in any type of computer system or processing environment capable of supporting the methodologies of the present invention presented in detail below.

### Improved online access to photographic images and attributes

### A. General design considerations

Today, it is easy for a given user to make a set of his or her photographs available on the Web. For instance, the user may have an account at a photographic sharing site, whereupon the user places his or her photographs on a server connected to the Internet. At the same time, various target devices exist that are capable of displaying photographs. Therefore, the specific problem addressed may be summarized as follows: given the various target devices available and given a set of photos available in a particular format via the Internet, how does one translate those photographs in a manner suitable for viewing by the target devices, so that when the photographs are transmitted to a particular target device they may be perceived by users in a satisfactory manner.

Multiple issues exist in regards to getting the preferences of a particular target device. For instance, some of the devices can publish their capabilities, while others cannot. For those devices that can publish their capabilities, a mechanism is required that can identify those capabilities, on a per-request basis, and generate appropriate data automatically and on-the-fly. In some cases, the capabilities of the device are known beforehand, for instance, based on the identity of the target device itself. This may be achieved, for example, by including a knowledgebase that includes information about popular devices. However, knowing a particular target device's capabilities itself is not enough. Given a target device with multiple capabilities, the user himself or herself may express a particular preference for use of a particular capability of the target device. In such a case, the user of the target device may set various preferences for that device. That preference information itself may or may not be available, on demand, at the server.

Once the preferences are determined and given a particular set of photographs, the system includes intelligence that allows it to optimally translate the photographs (from their original format) into a format suitable for use by the particular target device. Although the actual translation of an image from one format to another may be performed using off-the-shelf techniques, the overall translation or transformation process must be performed in a manner that preserves performance and scalability criteria desired for the system.

An important consideration for this process is the underlying transport speed available for transmitting an image to a particular target device. Consider, for instance, a very intelligent device that supports complete color display. If that device is connected over a 9600 baud connection, however, the server should not transmit the entire, full color (e.g., 32-bit depth) image for display at that device. Accordingly, the system should take into account the capability of the transport that is currently available for sending photographic images to the target device. In the currently preferred embodiment, the capability of the transport (i.e., dynamically-available bandwidth) for a given target device is treated as one of the capabilities of that target device.

### B. High-level description of Photographic Server system

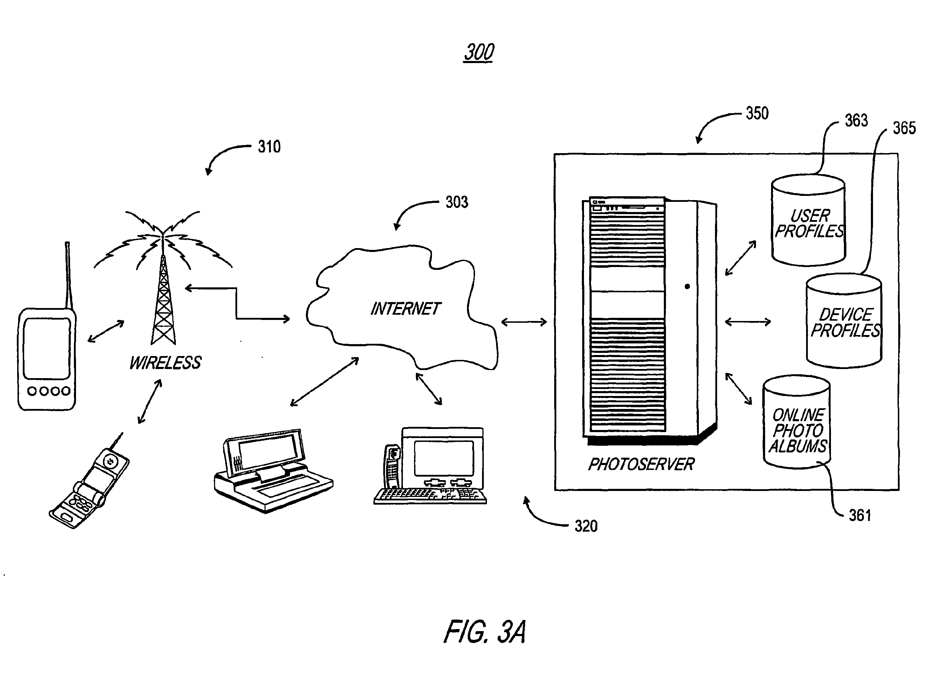

Figs. 3A-B illustrate an online photographic environment 300 of the present invention for delivering photographic images to any device with connectivity capability. As shown in Fig. 3A, the environment 300 includes connectivity to a variety of target devices ("clients"); each of the devices is capable of connecting over the Internet (shown at 303) to a Photographic Server System (PhotoServer) 350, for accessing online photo albums 361 according to user and device profiles (at 363 and 365, respectively). For example, the target devices include both wireless devices 310 (e.g., cellular phone, handheld PDA (personal data assistant), and pager) as well as wireline devices 320 (e.g., desktop computer and videophone).

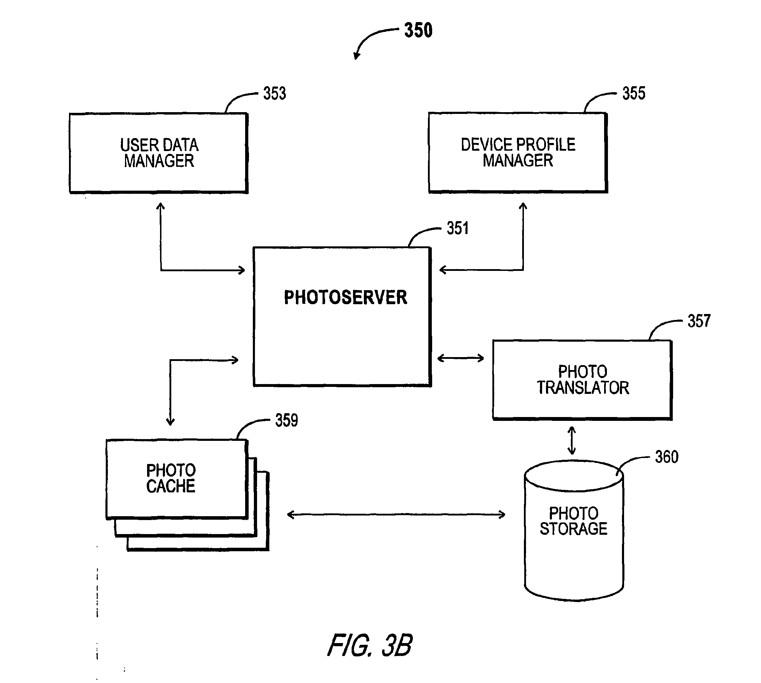

The architecture of the PhotoServer 350 is shown in greater detail in Fig. 3B. As illustrated, the PhotoServer 350 includes the following modules: a Photographic Server (i.e., the core "photo server") 351, a User Data Manager 353, a Device Profile Manager 355, a Photo Translator 357, a Photo Cache 359, and a Photo Storage (module) 360. The Photographic Server 351 is responsible for serving up the photos based on the target device display capabilities. The display capabilities are communicated to the Photographic Server 351 by the device or the person who owns or controls the device, or are surmised by the system. If the device is communicating its capabilities, it does so during the initiation or during every interaction; alternatively, its capabilities are hard-coded into the Photographic Server 351 based on the prior knowledge of the device. The owner of the device can fine-tune the settings based on the actual settings of the device (such as resolution, preferred method of translation, and the like). The Photographic Server 351, which works independently of the available transport mechanisms (e.g., wireless or wireline), interacts with all the other modules to translate a requested photo into an appropriate target format.

The other modules function as follows. The User Data Manager 353 manages all the user information, user preferences, and the device types owned by the users. It also lists all the optional preference settings for those devices that support preference settings. The Device Profile Manager 355 manages all the known devices (that the system supports), their capabilities, available transport mechanisms, and optional preferences. Every time a new device is encountered, its profile is entered into the Device Profile Manager 355. The PhotoServer 351 consults the Device Profile Manager 355 before translating the photos. The Photo Translator 357 translates the photo from one format (e.g., JPEG) to another (e.g., GIF) based on the parameters sent. In effect, this module is a wrapper around various internal translation methodologies embodied in the system.

The Photo Storage 360 provides a complete photo storage subsystem. This is where all photos are stored, each being identifiable by a unique identifier (photo ID). In the preferred embodiment, the Photo Storage 360 is implemented as a storage area network supporting massive data storage, on the order of terabytes. Each digital photograph is stored as an individual file, using the UNIX file system. Metadata for each photograph, on the other hand, is stored in a relational database table of a relational database system, thereby supporting querying of the information. Suitable relational database systems are available from numerous vendors, including Oracle Corporation of Redwood Shores, California, and Sybase, Inc. ofEmeryville, California.

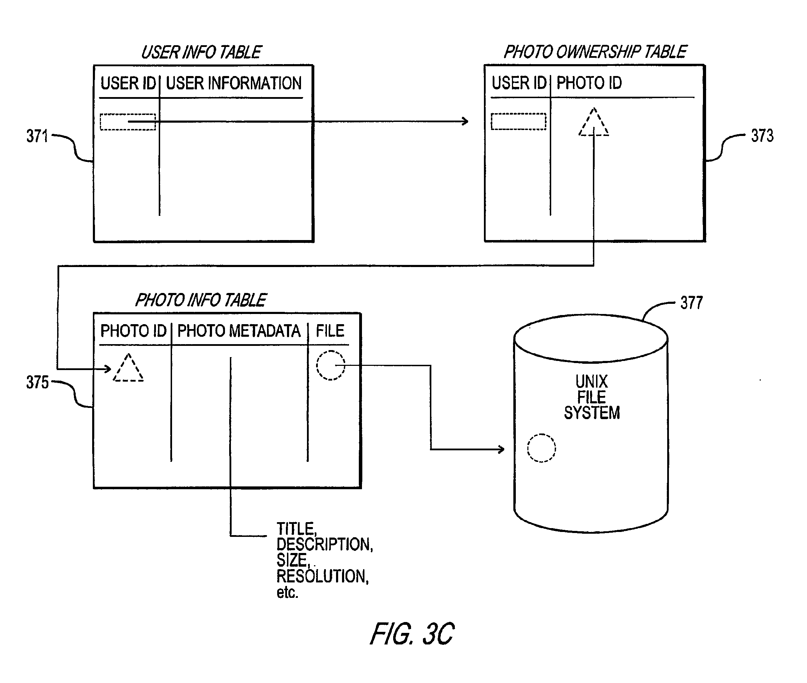

Fig. 3C illustrates an exemplary storage structure. User data is kept in a separate table, User Info Table 371, which is controlled by the User Data Manager 353. As shown, each user is associated with a user ID that uniquely identifies that particular user. Similarly, each photograph is associated with a photo ID that uniquely identifies that particular photograph. A unique ID may be created in a conventional manner, such as creating one from an auto-incrementing counter, such as a 128-bit counter, or from a system timestamp; in the currently-preferred embodiment, a 128-bit counter is employed. Every user "owns" a set of photos. Information about which photos belong to which users is itself stored in a separate table, a Photo Ownership Table 373. The table identifies who (by user ID) owns which photographs (by photo ID). This table, in turn, references a Photo Info Table 375 where information about individual photographs is stored. The Photo Info Table 375, which is keyed by photo ID (i.e., primary key), stores metadata about each photo as well as information about where the photograph itself (image data) is stored by the UNIX File System 377. The metadata itself includes a title, description, size of the photo, resolution of the photo, where originally created, and how it was uploaded to the system (including, for instance, information about the target devices own photo ID, if any). Both a photograph and its corresponding metadata may be streamed out to a target device on demand, per the methodology described below.

Supporting of the Photo Storage 360 is the Photo Cache 359. This is a disk-based, system-wide cache of translated photos, based on parameters supplied to the Photo Translator 357. The Photo Cache can grow or shrink, based on the size set by the system administrator. Previously-translated photos are kept in this cache. This cache is searched first for the availability of the photo and if a translated photo is available, then the photo is returned from the cache itself.

### C. Detailed operation

### 1. Overview

In accordance with the present invention, the PhotoServer 350 embodies a method that provides access to photographic images and attributes, including annotations (e.g., text or voice annotations) for multiple disparate client devices. The method is invoked in response to a request from any target device for a photograph(s) and/or information about that photograph(s).

### 2. High-level operation

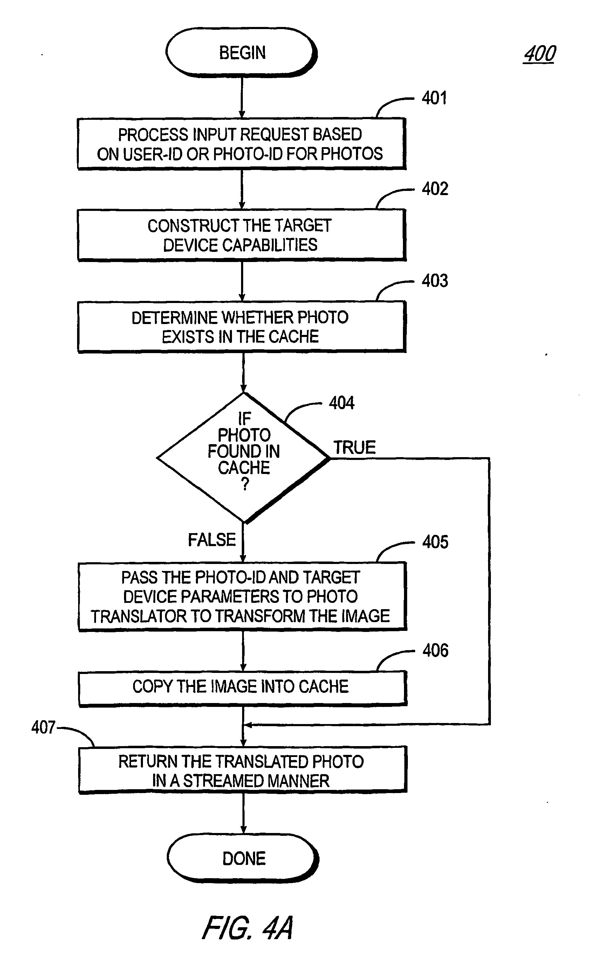

Fig. 4A illustrates the high-level steps involved in the overall method 400. As indicated by step 401, the method 400 processes the received input request based on a user identifier (user ID) or a photograph identifier (photo ID) for the photos that are of interest. The photo ID is a unique identifier for a particular photograph that either (1) has been created by the system and has been previously communicated to the target device (client), or (2) has been created by the target device (i.e., it is the target device's unique identifier), in the case where the target device is connecting for the first time. At step 402, the method constructs an information record describing the target device's capabilities. Information gathered from this step allows the PhotoServer 350 to understand exactly what capabilities it can support in the target device. In particular, this information indicates to the system what particular translation or transformation operation(s) is required for translating the original photo into a format suitable for the target device.

Now, the method is ready to check in the Photo Cache 359 to see if the cache already stores the photo of interest - that is, stores a version of the photo that has been translated in a manner suitable for this particular target device. This step is indicated at step 403. If the photo (translated for the target device) already exists in the Photo Cache, tested at step 404, the method may simply return that to the target device, as indicated by the jump to step 407. However, if it is not in the cache (i.e., "False" at step 404), then the method proceeds to step 405. At step 405, the photo ID and the target device parameters are passed on to the Photo Translator 357. The task of the Photo Translator, at this point, is to transform the photo from its original format into the format that is desired for the target device (based on target device capabilities). Once the Photo Translator has carried out this task, the newly-transformed version of the photo is copied into the Photo Cache, as shown at step 406, and that translated version of the photo is returned to the target device, as indicated by step 407, in a streaming fashion.

### 3. Constructing a target device's capabilities

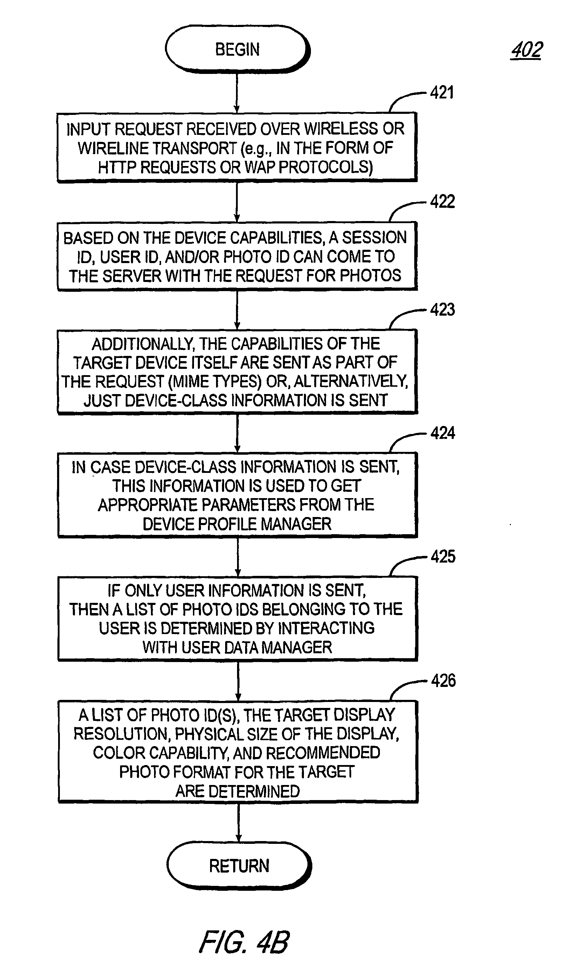

Fig. 4B illustrates the high-level step 402 in further detail, as subroutine steps 421-426. At the outset, at step 421, an input request is received, either over wireless or wireline transport. The request itself is transmitted using a communication protocol, such as a request using HTTP (Hypertext Transport Protocol) or WAP (Wireless Application Protocol). As indicated by step 422, information about the target device's capabilities may be sent as part of the input request. Based on the target device's capabilities, a session ID, a user ID, and/or a photo ID may also accompany the request for photos. For an HTTP browser at the target device, for example, only a session ID accompanies the request sent to the PhotoServer. In that case, the session ID is employed to determine who the user is (user ID) and what photos that user has on the PhotoServer. For a WAP browser at the target device, in contrast, far more information may be provided, including the user ID and the actual photo ID. At the low end of the scale, a simple handheld device may not have any capability to store state information, in which case the request does not include additional information.

Additionally, the capabilities of the target device itself are sent as part of the request (MIME types) or, alternatively, just device-class information is sent, as indicated by step 423. For example, an HTTP browser may indicate the browser name (e.g., "Netscape Navigator" or "Microsoft Internet Explorer"), the browser version, and the graphic types it supports. This information is helpful in instances where graphic support is limited, such as a browser running on a set-top box having very limited graphic support (e.g., JPEG support only). In the case that the target device is not able to indicate its capabilities, it will at least indicate its device class, such as a Palm handheld device, a set-top box, as phone with a WAP browser, or the like. In case device class information is sent, this information is used to get appropriate parameters from the Device Profile Manager, as indicated by step 424. Based on the device class, the Device Profile Manager will return information about what that device's capabilities are. For example, the device class may be a Palm handheld device of a particular model. Based on that, the Device Profile Manager may discern, based on its knowledgebase, the capabilities of the device, such as display capability (e.g., 16-color), device memory (e.g., 4-8 MB), display size (e.g., 3'' x 5"), and a 56K modem. If only user information is sent (i.e., photo IDs are not transmitted as part of the request), then the method determines a list of photo IDs belonging to the user by using the User Data Manager 353, as indicated by step 425. Now, the method has identified a list of photo IDs (one or more photos), display resolution and physical size, color capability, and recommended photo format for the target device, as indicated by step 426.

Although not shown as a specific step above, the underlying communication transport may be inferred from the class or type of device. For example, if the target device is a cellular phone, the system may infer that the underlying communication transport is wireless. As another example, if the target device is a pager that is communicating using WAP, the system may infer that the target device uses wireless communication with limited bandwidth (as compared to a cellular phone). Based on the device class and the incoming request, the system may usually discern whether the communication transport is wireless or wireline. Moreover, very few devices have both wireless and wireline capability. Typical wireline connections include T1, DSL, cable modem and dial-up connections. On the wireless side, typical connections include 9600 baud circuit-switched data call, 9600 baud packet-switched data call, or the newer 64K baud GPR call.

### 4. Photo Cache processing

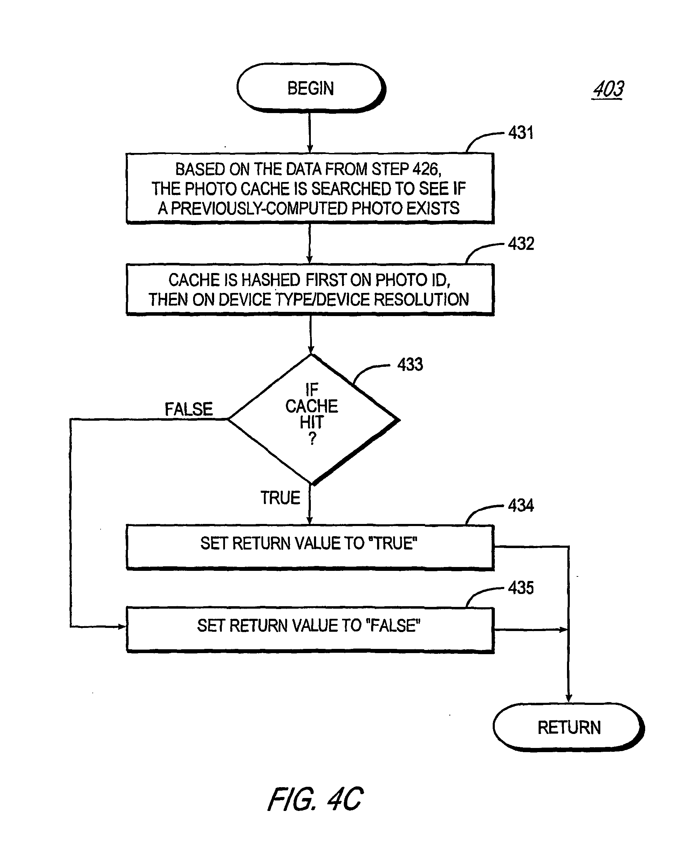

Fig. 4C illustrates the high-level step 403 in further detail, as subroutine steps 431-435. Based on the data from step 426, the Photo Cache is searched at step 431 to see whether a previously-computed photo exists. In other words, has this same translation operation been performed previously on exactly the same photo for the same device (or a device requiring the same translation), and that translated photo still remains in the cache. In the currently-preferred embodiment, each cache entry is identified by hashing first on the photo ID (e.g., long integer) and then on the device type (e.g., text string) at a particular device resolution (e.g., text string), as indicated by step 432. In the case of a cache hit (i.e., the hash value resolves to a temporary filename for the cached photo), tested at step 433, the return value for the subroutine is set to "True" as indicated at step 434. Otherwise, the return value is set to "False", as indicated at step 435. Thereafter, the subroutine may return.

### 5. Photo Translator processing

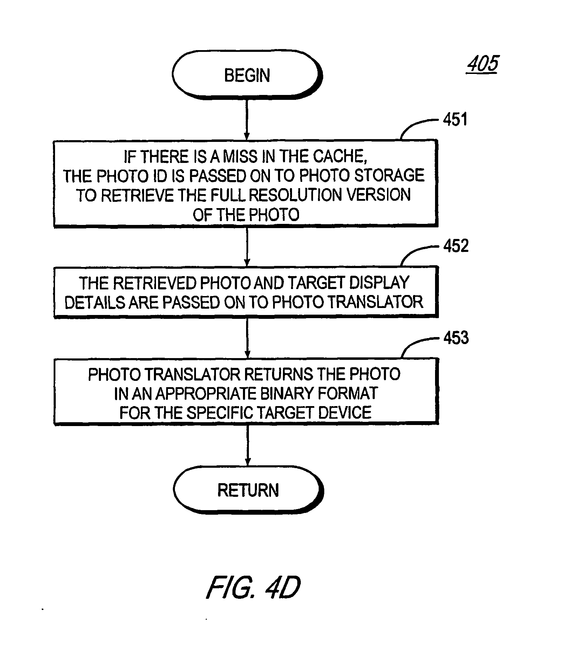

Fig. 4D illustrates the high-level step 405 in further detail, as subroutine steps 451-453. If there is a miss in the cache, then the desired photo must be translated. Therefore, at step 451, the photo ID is passed to the Photo Storage (module) 360 to retrieve the full resolution version of the photo. The retrieved photo and target display details are passed on to Photo Translator, at step 452. The Photo Translator carries out any necessary translation, by invoking the device-independent rendering described below. Finally, the Photo Translator returns the photo in an appropriate binary format for the specific target device, at step 453. Thereafter, the subroutine may return.

During its operation, the Photo Translator implements "device-independent rendering." Here, the image data is first converted into an intermediate format that is device independent. Thereafter, device dependent routines convert the intermediate format to an appropriate device format for the target device. The Photo Translator receives as input the following:
Photo in Clikpix or JPEG format;
Dimensions of output (width and height);
Type of output device;
Color space (e.g., RGB or Grayscale);
Color palette (e.g., True color or indexed); and
Compression technique.
From these inputs, the Photo Translator may output a picture in the specified output format at the specified size. Note that some devices may be characterized differently than their native characteristics. For example a device with a 16-color LCD display may prefer to be characterized as a true-color device. It is then the responsibility of the device to convert the true-color mode image transmitted by the PhotoServer to its internal 16-color mode using internal software/hardware. The compression scheme could be proprietary or an industry standard like JPEG, JBIG, GIF, or the like. See, e.g., JPEG-like Image Compression (Parts 1 and 2), Dr. Dobb's Journal, July 1995 and August 1995 respectively (available on CD ROM as *Dr. Dobb's*/*CD Release 6* from Dr. Dobb's Journal of San Mateo, CA).

The specific operation of the Photo Translator is as follows. First, the input picture is decompressed to generate a bitmap in the color space that was employed. For example, Clikpix uses GUV color space; JPEG supports multiple color space, including YUV and RGB. GUV color space is described in commonly-owned application serial number 09/489,511, filed January 21, 2000; a description of industry-standard color spaces may also be found in that application. The picture is then converted to a "standard" intermediate format, typically in one of the industry-standard color spaces. Examples include:
L,a,b 16bits/pixel/channel (e.g., used in Adobe Photoshop);
SRGB 8bits/pixel/channel (e.g., used by Microsoft, HP, and others); and
YUV
The intermediate format is then mapped to the format required by the output device with the following processing:
1. Image scaling - to scale the image to the desired output size.
2. If only monochrome information is desired, then a monochrome version of the image is generated using standard conversion methods (e.g., using International Telecommunication Union (ITU) recommendations for generating luminance signal Y from R,G,B signals, see, e.g.: ITU-Recommendation BT.601-1 "Encoding parameters of Digital Television for studio").
3. If the bits/pixel is fewer than 8 - then dithering techniques (such as error diffusion, blue noise masking, or the like - see, e.g., "Recent Progress in Digital Halftoning", 1994, The Society of Imaging Science and Technology, compiled and edited by Reiner Eschbach, ISBN 0-892080-181-3).
4. If the output device has a color palette (e.g., supporting only 256 colors) then color dithering schemes are used. Such schemes are discussed in some detail in "Computer Graphics-Principles and Practice", Second Edition, 1990, Foley, van Dam, et al., Addison-Wesley, Reading, MA, ISBN 0-201-12110-7.
5. Compression is optionally performed before data is streamed out. For true-color images, the preferred compression scheme is JPEG. For indexed images GIF, PNG are the preferred methods. For halftoned images, the preferred approach would be JBIG compression.
Finally, the generated picture is outputted, and is ready for streaming to a target device for ultimate rendering on that device's display.

### D. Photo annotations

In addition to photo attributes (e.g., size, color depth, and so forth), metadata also includes user-supplied annotations. When users arrive online to view photos, they often wish to view the annotations associated with those photos. Annotations include, for instance, text or voice descriptions created by various users, including the owner of the photo or those users whom the owner shares the photos with.

Just as target devices have varying levels of capability for displaying photos, those devices also have varying levels of capability for rendering the annotations. Many potential target devices may not include the capability to display both the image and the accompanying annotations on the same screen, thus necessitating use of, for instance, "next" and "previous" screens. Other devices, on the other hand, may include advanced capabilities for displaying images and annotations simultaneously on the same screen. Because each device class' capabilities are tracked, the system knows exactly what is the capability of a particular target device. Therefore, in accordance with the present invention, the system is able to dynamically (i.e., on-the-fly) format the annotations in a manner that is appropriate for the particular target device. If needed, for example, the system may format annotations into multiple pages, as appropriate for the target device. Or, if voice annotations exist for a photo, and the target device supports voice data, those annotations may be streamed to the target device. Thus as was the case with the image data, the system of the present invention may format or translate the annotations of a photo in a manner suitable for the target or destination device.

While the invention is described in some detail with specific reference to a single-preferred embodiment and certain alternatives, there is no intent to limit the invention to that particular embodiment or those specific alternatives. For instance, those skilled in the art will appreciate that modifications may be made to the preferred embodiment without departing from the teachings of the present invention.

## Claims

1. In an online system, a method for providing digital photographic images to target devices, the method comprising:
receiving (401) a request to provide a target device with a copy of a particular photographic image, wherein said request specifies a photographic identifier (photo ID) and/or a user identifier (user ID);
determining (402) capabilities of the target device;
based on the capabilities of the target device, determining a format that is desired for providing the target device with a copy of the particular photographic image, wherein, at least in part based on a device class for the target device, communication bandwidth available for transmitting a copy of the particular photographic image to the target device is determined;
determining (403) whether a cached copy of the particular photographic image already exists in said determined format;
if a cached copy exists, providing (407) the target device with the cached copy of the particular photographic image and thereafter terminating the method;
if a cached copy does not exist, translating (405) the particular photographic image into a copy having said determined format; and
providing the target device with the copy having said determined format,
**characterized in that**
the translating includes decompressing the particular photographic image to generate a bitmap in the color space that was employed, converting the bitmap of the particular photographic image to a standard intermediate format, and mapping the intermediate format of the particular photographic image to said determined format.

2. The method of claim 1, wherein said step of determining capabilities of the target device includes: querying the device for its capabilities.

3. The method of claim 1, wherein said step of determining capabilities of the target device includes: determining capabilities from a knowledgebase, based on the device class for the target device.

4. The method of claim 1, wherein said step of determining a format that is desired includes determining user preferences, if any, for rendering images at the target device.

5. The method of claim 1, further comprising: based on the capabilities of the target device, determining metadata for the particular photographic image that may be provided to the target device.

6. The method of claim 5, wherein said metadata includes attribute information for the particular photographic image.

7. The method of claim 6, wherein said metadata includes annotations for the particular photographic image.

8. An online photographic server system for providing digital photographic images to target devices, the system comprising:
a storage module (360, 359)) for storing digital photographic images for sharing among users; and
a photographic server (351):
for processing a request to provide a target device with a copy of a particular photographic image, wherein each digital photographic image stored by said storage module is associated with a photographic identifier (photo ID), and said request includes the photo ID for said particular photographic image, wherein said request specifies a user identifier (user ED), and wherein said system stores information associating each user with one or more particular digital photographic images;
for automatically determining capabilities of the target device; and
for providing the target device with a copy of the particular photographic image, said copy being automatically translated into a particular format based on the capabilities of the target device, wherein said particular format is selected based on communication bandwidth available for transmitting a copy of the particular photographic image to the target device, wherein the communication bandwidth available is determined, at least in part, based on a device class for the target device,
**characterized by**
a photo translator (357) for translating the copy into the particular format by decompressing the particular photographic image to generate a bitmap in the color space that was employed, converting the bitmap of the particular photographic image to a standard intermediate format, and mapping the intermediate format of the particular photographic image to said particular format.

9. The system of claim 8, wherein said photographic server includes the ability to query the target device for its capabilities.

10. The system of claim 8, wherein said photographic server includes a knowledgebase for determining the capabilities of the target device.

11. The system of claim 8, wherein said particular format is selected, at least in part, based on user preferences, if any, for rendering images at the target device.

12. The system of claim 8, wherein the storage system stores metadata for each of the digital photographic images, and wherein the photographic server is capable of determining metadata for the particular photographic image that may be provided to the target device.

13. The system of claim 12, wherein said metadata includes attribute information for the particular photographic image.

14. The system of claim 12, wherein said metadata includes annotations for the particular photographic image.

## Patentansprüche

1. Verfahren in einem Online-System zum Bereitstellen digitaler photographischer Bilder an Zielgeräte, wobei das Verfahren aufweist:
Empfangen (401) einer Anfrage einem Zielgerät eine Kopie eines spezifischen photographischen Bildes bereitzustellen, wobei die Anfrage einen Photo-Identifikator (photo ID) und/oder einen Benutzer-Identifikator (user ID) spezifiziert;
Bestimmen (402) von Fähigkeiten des Zielgerätes;
Bestimmen eines Formates, das bei dem Bereitstellen einer Kopie des spezifischen photographischen Bildes an das Zielgerät gewünscht ist, basierend auf den Fähigkeiten des Zielgerätes, wobei eine zum Übertragen einer Kopie des spezifischen photographischen Bildes an das Zielgerät verfügbare Kommunikationsbandbreite zumindest teilweise basierend auf einer Geräteklasse für das Zielgerät bestimmt wird;
Bestimmen (403), ob eine zwischengespeicherte Kopie des spezifischen photographischen Bildes in dem bestimmten Format bereits existiert;
wenn eine zwischengespeicherte Kopie existiert, Bereitstellen (407) der zwischengespeicherten Kopie des spezifischen photographischen Bildes an das Zielgerät und anschließendes Beenden des Verfahrens;
wenn eine zwischengespeicherte Kopie nicht existiert, Übersetzen (405) des spezifischen photographischen Bildes in eine Kopie, die das bestimmte Format aufweist; und
Bereitstellen der Kopie, die das bestimmte Format aufweist, an das Zielgerät,
**dadurch gekennzeichnet, dass**
das Übersetzen ein Dekomprimieren des spezifischen photographischen Bildes, um ein Bitmap in dem verwendeten Farbraum zu erzeugen, Umwandeln des Bitmaps des spezifischen photographischen Bildes in ein genormtes Zwischenformat und Abbilden des Zwischenformates des spezifischen photographischen Bildes auf das bestimmte Format umfasst.

2. Verfahren gemäß Anspruch 1, wobei der Schritt des Bestimmens der Fähigkeiten des Zielgerätes umfasst: Abfragen des Gerätes nach seinen Fähigkeiten.

3. Verfahren gemäß Anspruch 1, wobei der Schritt des Bestimmens der Fähigkeiten des Zielgerätes umfasst: Bestimmen der Fähigkeiten aus einer Wissensdatenbank basierend auf der Geräteklasse des Zielgerätes.

4. Verfahren gemäß Anspruch 1, wobei der Schritt des Bestimmens eines Formates, das gewünscht ist, ein Bestimmen von Benutzereinstellungen zur Darstellung von Bildern bei dem Zielgerät umfasst, falls vorhanden.

5. Verfahren gemäß Anspruch 1, weiterhin mit: Bestimmen, basierend auf den Fähigkeiten des Zielgerätes, von Metadaten für das spezifische photographische Bild, das an das Zielgerät bereitgestellt werden könnte.

6. Verfahren gemäß Anspruch 5, wobei die Metadaten Attributsinformationen für das spezifische photographische Bild umfassen.

7. Verfahren gemäß Anspruch 6, wobei die Metadaten Anmerkungen für das spezifische photographische Bild umfassen.

8. Photographisches Online-Server-System zur Bereitstellung digitaler photographischer Bilder an Zielgeräte, wobei das System aufweist:
ein Speichermodul (360, 359) zur Speicherung digitaler photographischer Bilder, zur gemeinsamen Benutzung durch Benutzer; und
einen photographischen Server (351):
zur Verarbeitung einer Anfrage einem Zielgerät eine Kopie eines spezifischen photographischen Bildes bereitzustellen, wobei jedem durch das Speichermodul gespeicherten digitalen photographischen Bild ein Photo-Identifikator (photo ID) zugewiesen ist, und die Anfrage die Photo-ID für das spezifische photographische Bild umfasst, wobei die Anfrage einen Benutzer-Identifikator (user ID) spezifiziert, und wobei das System Informationen speichert, die jedem Benutzer ein oder mehrere spezifische digitale photographische Bilder zuweisen;
zur automatischen Bestimmung von Fähigkeiten des Zielgerätes; und
zur Bereitstellung einer Kopie des spezifischen photographischen Bildes an das Zielgerät, wobei die Kopie basierend auf den Fähigkeiten des Zielgerätes automatisch in ein spezifisches Format übersetzt wird, wobei das spezifische Format basierend auf der für die Übertragung einer Kopie des spezifischen photographischen Bildes an das Zielgerät verfügbaren Kommunikationsbandbreite ausgewählt ist, wobei die verfügbare Kommunikationsbandbreite zumindest teilweise basierend auf einer Geräteklasse für das Zielgerät bestimmt ist,
**gekennzeichnet durch**
einen Bildübersetzer (357) zur Übersetzung der Kopie in das spezifische Format **durch** Dekomprimierung des spezifischen photographischen Bildes, um ein Bitmap in dem verwendeten Farbraum zu erzeugen, zur Umwandlung des Bitmaps des spezifischen photographischen Bildes in ein genormtes Zwischenformat und zur Abbildung des Zwischenformats des spezifischen photographischen Bildes in das spezifische Format.

9. System gemäß Anspruch 8, wobei der photographische Server die Befähigung umfasst, das Zielgerät nach seinen Fähigkeiten abzufragen.

10. System gemäß Anspruch 8, wobei der photographische Server eine Wissensdatenbank zur Bestimmung der Fähigkeiten des Zielgerätes umfasst.

11. System gemäß Anspruch 8, wobei das spezifische Format zumindest teilweise basierend auf Benutzereinstellungen zur Darstellung von Bildern bei dem Zielgerät ausgewählt ist, falls vorhanden.

12. System gemäß Anspruch 8, wobei das Speichersystem Metadaten für jedes der digitalen photographischen Bilder speichert, und wobei der photographische Server zur Bestimmung von Metadaten für das spezifische photographische Bild fähig ist, das an das Zielgerät bereitgestellt werden könnte.

13. System gemäß Anspruch 12, wobei die Metadaten Attributsinformationen für das spezifische photographische Bild umfassen.

14. System gemäß Anspruch 12, wobei die Metadaten Anmerkungen für das spezifische photographische Bild umfassen.

## Revendications

1. Procédé destiné à fournir des images photographiques numériques à des dispositifs cibles dans un système en ligne, le procédé comprenant le fait de :
recevoir (401) une demande pour fournir à un dispositif cible une copie d'une image photographique particulière, où ladite demande spécifie un identifiant photographique (ID photo) et/ou un identifiant d'utilisateur (ID utilisateur) ;
déterminer (402) les capacités du dispositif cible ;
sur la base des capacités du dispositif cible, déterminer un format qui est désiré pour fournir au dispositif cible une copie de l'image photographique particulière, où, au moins en partie sur la base d'une classe de dispositif pour le dispositif cible, la bande passante de communication disponible pour transmettre une copie de l'image photographique particulière au dispositif cible est déterminée ;
déterminer (403) si une copie en antémémoire de l'image photographique particulière existe déjà dans ledit format déterminé ;
si une copie en antémémoire existe, fournir (407) au dispositif cible la copie en antémémoire de l'image photographique particulière et terminer ensuite le procédé ;
si une copie en antémémoire n'existe pas, transformer (405) l'image photographique particulière en une copie ayant ledit format déterminé ; et
fournir au dispositif cible la copie ayant ledit format déterminé,
**caractérisé en ce que**
la transformation comporte le fait de décompresser l'image photographique particulière pour générer un topogramme binaire dans l'espace colorimétrique qui a été employé, de convertir le topogramme binaire de l'image photographique particulière en un format intermédiaire standard, et de mettre en correspondance le format intermédiaire de l'image photographique particulière avec ledit format déterminé.

2. Procédé de la revendication 1, dans lequel ladite étape de détermination des capacités du dispositif cible comporte le fait : d'interroger le dispositif concernant ses capacités.

3. Procédé de la revendication 1, dans lequel ladite étape de détermination des capacités du dispositif cible comporte le fait : de déterminer les capacités à partir d'une base de connaissance, sur la base de la classe de dispositif pour le dispositif cible.

4. Procédé de la revendication 1, dans lequel ladite étape de détermination d'un format qui est désiré comporte le fait de déterminer des préférences de l'utilisateur, s'il y a lieu, afin de rendre des images au dispositif cible.

5. Procédé de la revendication 1, comprenant en outre le fait de : déterminer, sur la base des capacités du dispositif cible, des métadonnées pour l'image photographique particulière qui peut être fournie au dispositif cible.

6. Procédé de la revendication 5, dans lequel lesdites métadonnées comportent des informations d'attribut pour l'image photographique particulière.

7. Procédé selon la revendication 6, dans lequel lesdites métadonnées comportent des annotations pour l'image photographique particulière.

8. Système de serveur photographique en ligne destiné à fournir des images photographiques numériques à des dispositifs cibles, le système comprenant :
un module de stockage (360, 359) destiné à stocker des images photographiques numériques pour les partagées entre des utilisateurs ; et
un serveur photographique (351) destiné à :
traiter une demande pour fournir à un dispositif cible une copie d'une image photographique particulière, où chaque image photographique particulière stockée par ledit module de stockage est associée à un identifiant photographique (ID photo), et ladite demande comporte l'identifiant photographique pour ladite image photographique particulière, où ladite demande spécifie un identifiant d'utilisateur (ID utilisateur), et où ledit système stocke des informations associant chaque utilisateur avec une ou plusieurs images photographiques numérique ;
déterminer automatiquement les capacités du dispositif cible ; et
fournir au dispositif cible une copie de l'image photographique particulière, ladite copie étant automatiquement transformée en un format particulier sur la base des capacités du dispositif cible, où ledit format particulier est choisi sur la base d'une bande passante de communication disponible pour transmettre une copie de l'image photographique particulière au dispositif cible, où la bande passante de communication disponible est déterminée, au moins en partie, sur la base d'une classe de dispositif pour le dispositif cible,
**caractérisé par**
un transformateur photographique (357) destiné à transformer la copie en le format particulier en décompressant l'image photographique particulière pour générer un topogramme binaire dans l'espace colorimétrique qui a été employé, à convertir le topogramme binaire de l'image photographique particulière en un format intermédiaire standard, et à mettre en correspondance le format intermédiaire de l'image photographique particulière avec ledit format particulier.

9. Système de la revendication 8, dans lequel ledit serveur photographique comporte la possibilité d'interroger le dispositif cible concernant ses capacités.

10. Système de la revendication 8, dans lequel ledit serveur photographique comporte une base de connaissances pour déterminer les capacités du dispositif cible.

11. Système de la revendication 8, dans lequel ledit format particulier est choisi, au moins en partie, sur la base des préférences de l'utilisateur, s'il y a lieu, afin de rendre des images au dispositif cible.

12. Système de la revendication 8, dans lequel le système de stockage stocke des métadonnées pour chacune des images photographiques numériques, et où le serveur photographique est capable de déterminer des métadonnées pour l'image photographique particulière qui peut être fournie au dispositif cible.

13. Système de la revendication 12, dans lequel lesdites métadonnées comportent des informations d'attribut pour l'image photographique particulière.

14. Système de la revendication 12, dans lequel lesdites métadonnées comportent des annotations pour l'image photographique particulière.
